# EUROPÄISCHE PATENTANMELDUNG

(11) **EP 3 447 009 A1**
(43) Veröffentlichungstag der Anmeldung: **27.02.2019**
(21) Anmeldenummer: 18199435.1
(22) Anmeldetag: 02.05.2016
(51) Int. Cl.: B65G 47/88, B65G 21/10, B65G 15/12

(54) **TRANSPORTEUR MIT PARALLELEN UND HÖHENVERSTELLBAREN TRANSPORTEINRICHTUNGEN**

(30) Priorität: 30.04.2015 DE 102015005617
(62) Teilanmeldung aus: 16721140.8
(71) Anmelder: Heuft Systemtechnik GmbH, 56659 Burgbrohl (DE)
(72) Erfinder: Heuft, Bernhard, 56659 Burgbrohl (DE)
(74) Vertreter: Gritschneder, Sebastian

(57) **Zusammenfassung**

Die Vorrichtung zum Transportieren von Objekten, wie Behältern, Flaschen, Gebinden, Packstücken, umfasst eine erste Transporteinrichtung (12), die eine erste Fördergeschwindigkeit aufweist, mindestens eine zweite Transporteinrichtung (14), die parallel zur ersten Transporteinrichtung (10) angeordnet ist und eine zweite Fördergeschwindigkeit aufweist, wobei die erste und die mindestens eine zweite Transporteinrichtung miteinander eine im Wesentlichen geschlossene Transportoberfläche bilden und dieselbe Förderrichtung aufweisen, und mindestens eine Hubeinrichtung (26), mit der mindestens eine der Transporteinrichtungen (12, 14) höhenverstellbar ist, so dass zumindest ein Abschnitt einer Transportoberfläche der mindestens einen Transporteinrichtung (12, 14) über und/oder unter eine Transportoberfläche der anderen Transporteinrichtung (14, 12) anheb- und absenkbar ist. Die Erfindung betrifft auch ein entsprechendes Verfahren zum Transportieren von Objekten, wie Behältern, Gebinden, Packstücken.

## Beschreibung

Die vorliegende Anmeldung betrifft eine Vorrichtung und ein Verfahren zum Transport von stehenden Objekten wie Behältern, Flaschen, Gebinden, Packstücken auf einer Transportvorrichtung, die mindestens eine erste und eine zweite parallel zueinander angeordnete Transporteinrichtung umfasst, wobei die Höhe von mindestens einer der Transporteinrichtungen einstellbar ist.

Transportvorrichtungen, die aus mehreren parallel angeordneten Bahnen bestehen, werden zum Beispiel beim Zusammenführen eines parallelen Stroms aufrecht stehender Behälter, wie zum Beispiel Flaschen, verwendet. Eine solche Vorrichtung ist aus der DE-A1-43 32 341 bekannt. Die Flaschen werden dabei zunächst auf mehreren Spuren mit einer ersten Transportgeschwindigkeit heran gefördert. Über ein kurvenförmiges Geländer werden die Flaschen dann auf parallel laufende Transportbänder verschoben. Diese parallel laufenden Transportbänder werden mit höherer Geschwindigkeit betrieben, so dass der langsamere mehrspurige Flaschenstrom in einen schnelleren einspurigen Flaschenstrom umgeformt wird. Die Antriebswellen der parallel angeordneten Transportbänder sind dabei üblicherweise über Getriebe miteinander verbunden, so dass die Geschwindigkeiten der parallelen Transportbänder immer ein vorgegebenes Verhältnis zueinander aufweisen.

Des Weiteren ist es aus der DE-A1-198 16 960 bekannt, Gliederkettenförderer mit heb- und senkbaren Bremselementen auszustatten, um zu befördernde Objekte selektiv stillzusetzen. Die Bremselemente sind dabei vorzugsweise parallel zur Transportrichtung angeordnet und können über ein geeignetes hydraulisches oder pneumatisches System parallel zur Transportrichtung und über diese hinweg angehoben werden. Die Länge der Bremselemente entspricht im Wesentlichen der Länge einzelner Objekte. Mit den Bremselementen können daher einzelne Objekte von der Transportoberfläche des Förderers abgehoben werden, so dass dieses von dem weiterlaufenden Förderer nicht mehr weitertransportiert wird.

Aus der DE-A1-43 30 235 ist eine Transportvorrichtung bekannt, bei der beiderseits eines kontinuierlichen Transporteurs Hubeinheiten vorgesehen sind, mit denen Bremsleisten, die in Längsrichtung der Förderbahn ausgerichtet sind, über die Auflageebene der Förderbahn anhebbar sind. Die Leisten bilden dabei eine schiefe Ebene, durch die die transportierten Packstücke von der Förderbahn abgehoben werden können. Wiederum entspricht die Länge der Leisten im Wesentlichen der Länge einzelner Objekte. Mehrere Hubeinheiten können hintereinander angeordnet werden, um ein staudruckloses Anhalten mehrerer Packgüter zu ermöglichen.

Um Lücken zwischen transportierten Objekten zu schließen, werden in konventionellen Transporteinrichtungen sogenannte Aufholstrecken eingesetzt. Die Aufholstrecken sind dabei parallel zur Transportrichtung angeordnete, mit höherer Geschwindigkeit laufende Transportbänder. Die Objekte werden bei Bedarf auf diese parallelen Aufholstrecken verschoben. Am Ende der Aufholstrecke werden die Objekte dann wieder zurück auf die ursprüngliche Transporteinrichtung geschoben. Durch die parallele Anordnung erfordern solche Aufholstrecken einen erhöhten Platzbedarf. Das seitliche Verschieben stellt zudem eine potentielle Gefahrenstelle dar, da es hierbei leicht zum Kippen der transportierten Objekte kommen kann.

Aufgabe der vorliegenden Erfindung ist es, die Versatilität von Transportvorrichtungen zu erhöhen, insbesondere eine Möglichkeit zu schaffen, die Geschwindigkeit einzelner Objekte gezielt steuern zu können und somit den Behälterfluss besser kontrollieren und steuern zu können.

Gelöst wird diese Aufgabe bei der Vorrichtung der eingangs genannten Art durch die Merkmale gemäß Anspruch 1. Die Vorrichtung umfasst mindestens eine erste und eine zweite Transporteinrichtung, die parallel zueinander angeordnet sind und jeweils mit einer definierten Fördergeschwindigkeit betrieben werden. Die erste und die mindestens eine zweite Transporteinrichtung bilden dabei eine im Wesentlichen geschlossene Transportoberfläche und weisen dieselbe Förderrichtung auf. Die Fördergeschwindigkeiten dieser mindestens zwei Transporteinrichtungen sind vorzugsweise voneinander verschieden und noch bevorzugter unabhängig voneinander einstellbar.

Des Weiteren ist mindestens eine Hubeinrichtung vorgesehen, mit der die relative Position der Transportebenen der Transporteinrichtungen zueinander verstellbar ist, so dass zumindest ein Abschnitt einer Transportoberfläche der mindestens einen Transporteinrichtung über oder unter eine Transportoberfläche der anderen Transporteinrichtung anheb- oder absenkbar ist.

Objekte im Sinne der vorliegenden Erfindung können dabei Behälter wie Glasflaschen, Plastikflaschen, Container, Dosen, Gebinde oder andere Packstücke sein.

Der Begriff Transporteinrichtungen, wie er hierin verwendet wird, umfasst jegliche Art von typischerweise beim Transport von den oben angegebenen Objekten verwendeten Transporteuren. Flaschen oder Dosen werden vorzugsweise auf endlosen Gliederkettenförderern oder Transportbändern transportiert, die über Umlenkrollen motorisch angetrieben werden und sowohl geradlinig als auch kurvengängig ausgeführt sein können. Die vorliegende Erfindung ist aber nicht auf die Verwendung bei Gliederkettenförderern oder Transportbändern beschränkt.

Der Ausdruck "geschlossene Transportoberfläche", wie er hierin verwendet wird, soll bedeuten, dass sich zwischen den Transportoberflächen der einzelnen Transporteinrichtungen keine größeren Lücken befinden, die zu einem Umfallen der transportierten Objekte führen können. Bei dem Transport von den oben definierten Objekten werden üblicherweise immer Transporteure mit derartigen "geschlossene Transportoberflächen" eingesetzt, um ein Überführen von Objekten von einer Transporteinrichtung auf eine benachbarte Transporteinrichtung zu ermöglichen.

Herkömmlich verwendete Gliederketten werden über Gleitflächen der Rahmenkonstruktion gezogen. Um die dabei entstehenden Reibungsverluste zu minimieren, werden je nach Anwendung spezielle Schmiermittel eingesetzt. Die Verwendung von Schmiermittel stellt aber einen erhöhten Wartungsaufwand dar. Gemäß einem Aspekt der vorliegenden Erfindung können die einzelnen Glieder der verwendeten Gliederketten Rollen aufweisen, auf denen die Gliederketten über Bahnen in der Rahmenkonstruktion der Transportvorrichtung abrollen können. Um ein seitliches Verrutschen der Gliederketten zu verhindern, sind zwischen den Bahnen vorzugsweise Trennwände vorgesehen. Die Glieder der Gliederkette können zudem seitliche Rollen aufweisen, mit denen sie an den seitlichen Trennwänden abrollen können. Durch die Verwendung von Rollen können die Reibungsverluste von Transporteinrichtungen zusätzlich reduziert werden.

Die Transportvorrichtung kann grundsätzlich aus beliebig vielen parallel angeordneten Transporteinrichtungen bestehen. Vorzugsweise verlaufen die Transporteinrichtungen dabei geradlinig. Es ist aber auch möglich, die vorliegende Erfindung bei kurvenförmig verlaufenden Transporteinrichtungen einzusetzen.

Grundsätzlich können alle Transporteinrichtungen mit Hubeinrichtungen zur Einstellung der vertikalen Position der Transportfläche versehen sein. Vorzugsweise besteht die Transportvorrichtung dagegen aus abwechselnd angeordneten höhenverstellbaren und nicht-höhenverstellbaren Transporteinrichtungen. Die festen oder nicht-höhenverstellbaren Transporteinrichtungen definieren dabei vorzugsweise eine erste Transportebene, auf der die Objekte im Normalbetrieb mit einer vorbestimmten und gegebenenfalls einstellbaren Fördergeschwindigkeit gefördert werden. Die Fördergeschwindigkeit der festen Transporteinrichtungen kann dabei für alle festen Transporteinrichtungen identisch sein. Alternativ können die festen Transporteinrichtungen jeweils mit einer individuell einstellbaren Geschwindigkeit betrieben werden.

Gleiches gilt auch für die Geschwindigkeiten der höhenverstellbaren Transporteinrichtungen. Auch diese können entweder mit individuell einstellbaren Geschwindigkeiten oder mit jeweils identischen Geschwindigkeiten betrieben werden. Die Wahl der jeweiligen Fördergeschwindigkeit der einzelnen Transporteinrichtungen hängt dabei immer von der Transportaufgabe ab.

Bei umlaufenden Transporteinrichtungen, wie Transportbändern oder Gliederkettenförderern, können die einzelnen Transportbänder mit konventionellen Antriebseinrichtungen, wie Servomotoren oder anderen Elektromotoren, ausgestattet sein. Die Transporteinrichtungen können zudem miteinander gekoppelt sein, so dass ein Motor mehrere Transporteinrichtungen gleichzeitig antreibt. Um die Transportbänder individuell anzusteuern, muss jedes Band mit einem eigenen Antrieb versehen sein. Besonders vorteilhaft können in diesem Zusammenhang elektrische Nabenmotoren eingesetzt werden. Solche Motoren können in die Umlenkrollen der einzelnen Transportbänder integriert werden und beanspruchen daher keinen zusätzlichen Platzbedarf. Insbesondere bei Transporteinrichtungen mit vielen parallel angeordneten umlaufenden Transportbändern verteilt sich die nötige Antriebsleistung auf viele der Nabenmotoren, so dass die Leistungsanforderungen an jeden einzelnen der Nabenmotoren geringer sind. Nabenmotoren, die mit einer Spannung von unter 50 V, z.B. 48 V betrieben werden, reichen daher aus, um die benötigte Antriebsleistung bereitzustellen. Solche Nabenmotoren haben dann zusätzlich den Vorteil, dass aufgrund dieser geringen Spannungen die Betriebssicherheit für das Bedienpersonal erhöht wird. Durch berstende Flaschen kommt es bei Transportvorrichtungen häufig zu Flüssigkeitsaustritten, die bei der Verwendung von Hochspannungsmotoren immer auch ein Sicherheitsrisiko für das Wartungspersonal darstellen.

Die mindestens eine Hubeinrichtung kann beliebige dem Fachmann bekannte Stellelemente oder Stellglieder aufweisen, über die die Höhe der Transporteinrichtungen steuerbar ist. Vorzugsweise können hierbei mechanische, elektromotorische, magnetische pneumatische oder hydraulische Stellelemente verwendet werden. Eine Hubeinrichtung kann dabei beliebig viele Stellelemente aufweisen, die über die Länge der Transporteinrichtung verteilt angeordnet sein können. Vorzugsweise sind die Stellelemente einzeln ansteuerbar, so dass die Höhe der Transporteinrichtung abschnittsweise veränderbar ist. Weiter vorzugsweise ist zumindest abschnittsweise ein Winkel in Transportrichtung zwischen den Transportoberflächen der ersten und der zweiten Transporteinrichtung einstellbar.

Die Hubeinrichtungen können direkt auf die Transporteinrichtungen einwirken oder mit einem Rahmen oder Unterbau verbunden sein, auf dem die Transporteinrichtungen aufliegen. Insbesondere bei konventionellen endlosen Gliederketten oder Förderbändern, die über stirnseitig angebrachte Umlenkrollen laufen und die über die gesamte Transportstrecke über eine Rahmenkonstruktion gezogen werden, können die Hubeinrichtungen vorteilhafterweise zur Einstellung der vertikalen Position der Rahmenkonstruktion verwendet werden. Damit die Objekte beim Übergang zwischen unterschiedlich hoch angeordneten Transporteinrichtungen nicht kippen, muss der Übergang im Wesentlichen stufenlos sein. Durch individuell einstellbare Stellelemente kann ein solcher stufenloser Übergang erreicht werden.

In einer weiteren Ausführungsform kann die mindestens eine Hubeinrichtung ein zusätzliches Element sein, welches mindestens zwei Abschnitte mit unterschiedlicher Dicke aufweist. Bei dieser Ausführungsform ist die höhenverstellbare Transporteinrichtung vorzugsweise ein umlaufendes Transportband oder ein Gliederkettenförderer. Das zusätzliche Element wird zwischen der Unterkonstruktion der Transportvorrichtung und dem Obertrum des Transportbands angeordnet, so dass das Obertrum über dem zusätzlichen Band geführt wird. Wenn der dünnere Abschnitt des zusätzlichen Elements unter dem Transportband angeordnet ist, so befindet sich die Transportoberfläche des höhenverstellbaren Transportbandes in einer unteren Position, in der es nicht in Eingriff mit den transportierten Objekten gelangt. Positioniert man dagegen das zusätzliche Element so, dass der Abschnitt mit größerer Dicke direkt unterhalb des Transportbandes angeordnet ist, so wird das Transportband von diesem Abschnitt über die Transportebene der fest angeordneten Transporteinrichtungen angehoben und gelangt in Eingriff mit den Objekten.

In einer vorteilhaften Ausführungsform ist das zusätzliche Element ein endloses Band, welches stirnseitig über Umlenkrollen geführt wird und welches eine Zunge aufweist, die einen Bereich mit erhöhter Dicke darstellt. Im Bereich des Obertrums, also im Bereich der Transportfläche des höhenverstellbaren Transportbands, verläuft das zusätzliche umlaufende Band in direktem Kontakt mit dem Obertrum des höhenverstellbaren Transportbands. Die Umlenkrollen sind mit einem Stellmotor versehen, über den das zusätzliche endlose Band positioniert werden kann. Um das höhenverstellbare Transportband anzuheben, wird das zusätzlich endlose Band so positioniert, dass der dickere Bereich der Zunge sich unterhalb des Obertrums befindet und dieses daher über die Zunge geführt wird. In diesem Bereich wird das höhenverstellbare Transportband durch die Zunge nach oben gedrückt, so dass die Transportfläche des Obertrums über die Transportebene der festen Transporteinrichtungen angehoben ist. Die Länge des angehobenen Bereichs kann durch Drehung des zusätzlichen Endlosbands eingestellt werden. Diese Ausführungsform bietet insbesondere den Vorteil, dass sie relativ einfach konstruktiv umgesetzt werden kann und aufgrund der robusten mechanischen Elemente relativ wartungsarm ist. Die Zunge kann außerdem sehr genau positioniert werden, so dass der Übergangsbereich, also der Bereich in dem sich die Transportebenen der Transporteinrichtungen schneiden, unmittelbar und damit sehr exakt festgelegt werden kann.

Je nachdem ob das endlose Band mit Zunge unterhalb der schneller laufenden Transporteinrichtungen oder unterhalb der langsamer laufenden Transporteinrichtungen vorgesehen ist, kann diese Ausführungsform für einfache Aufholstrecken oder zur Erzeugung von Staustrecken eingesetzt werden. Es ist auch möglich, dass jede Transporteinrichtung mit einem endlosen Band mit Zunge ausgestattet wird, so dass je nach Transportaufgabe ein und dieselbe Vorrichtung als Aufholstrecke oder als Staustrecke eingesetzt werden kann. Eine weitere Möglichkeit für eine Hubeinrichtung besteht zum Beispiel in einer unter einer Transporteinrichtung angeordneten Schraubenschnecke mit Stellelement. Durch Drehung der Schraubenschnecke wird das Stellelement entsprechend der Steigung und des Durchmessers der Schraubenschnecke in der Höhe verfahren.

Die Hubeinrichtungen umfassen zum Beispiel Exzenterstangen, die zum Beispiel unterhalb der Transporteinrichtungen angeordnet sein können. Durch Drehung der Exzenterstangen, kann dann die Höhe der Transporteinrichtungen variiert werden. Mit der Veränderung der Höhe kann auch hier dann wieder die Lage des Übergangsbereichs, also der Bereich in dem sich die Transportebenen der Transporteinrichtungen schneiden, eingestellt werden.

Es besteht auch die Möglichkeit, unterschiedliche Elemente der einzelnen Ausführungsformen miteinander zu kombinieren. Zum Beispiel kann bei einer Ausführungsform der Erfindung, bei dem das mindestens eine höhenverstellbare Transportband über ein zusätzliches Endlosband mit einer Zunge verfügt, auch noch zusätzlich eine Einrichtung vorgesehen sein, mit der die gesamte höhenverstellbare Transporteinrichtung gegenüber der nicht-höhenverstellbaren Transporteinrichtung vertikal verfahren werden kann. Dadurch kann man dann sozusagen die Nulllinie der höhenverstellbaren und der nicht-höhenverstellbaren Transporteinrichtungen relativ zueinander verschieben und damit die Transportvorrichtung optimal den jeweiligen Transporterfordernissen anpassen.

Besonders vorteilhaft kann die vorliegende Erfindung beim Betrieb von breiten Förderstrecken, auf denen die Objekte mehrreihig transportiert werden, eingesetzt werden. Die Breite der einzelnen Transporteinrichtungen ist vorteilhafterweise jeweils etwa gleich groß. Es können aber auch Transporteinrichtungen mit unterschiedlicher Breite miteinander kombiniert werden. Üblicherweise werden erfindungsgemäße Transportvorrichtungen in abwechselnder Reihenfolge höhenverstellbare und nicht höhenverstellbare Transporteinrichtungen aufweisen, wobei die Objekte jeweils nur auf denjenigen Transporteinrichtungen stehen, die momentan gerade am höchsten angeordnet sind. Die Objekte stehen daher üblicherweise nur auf jeder zweiten Transporteinrichtung. Damit die Objekte trotzdem jederzeit sicher auf der Transportvorrichtung stehen, sollte die Breite der Transporteinrichtungen höchstens 50 % der Breite bzw. des Querschnitts des Bodens der zu transportierenden Objekte betragen. Je kleiner die Breite der Transporteinrichtungen gegenüber den zu transportierenden Objekten ist, desto größer ist die Standfestigkeit der Objekte.

Weiter vorzugsweise sollte daher die Breite der Transporteinrichtungen weniger als 30 %, und noch bevorzugter weniger als 20 % der Breite der Standfläche der zu transportierenden Objekte betragen. Typische heutzutage verwendete Getränkeflaschen haben eine im Wesentlichen zylindrische Form und einen Bodendurchmesser von etwa 5 cm bis 12 cm. Die Breite der Transportbänder sollte demnach weniger als 6 cm, vorzugsweise weniger als 5 cm und weiter vorzugsweise weniger als 3,5 cm und besonders bevorzugt etwa 1,5 cm bis 2 cm betragen. Grundsätzlich gilt, dass die Objekte umso besser und stabiler stehen, je schmaler die Transportbänder sind, da dann die Objekte immer auf mehreren Transportbändern gleichzeitig stehen und von diesen transportiert werden.

In einer weiteren Ausführungsform kann die erfindungsgemäße Transportvorrichtung auch noch mit in Transportrichtung verlaufenden höhenverstellbaren Stegen oder Leisten versehen sein. Diese Stege sind vorzugsweise über eigene Stellelemente ansteuerbar. Die Stellelemente können beliebig gewählt werden, wobei ebenfalls wieder mechanische, magnetische, pneumatische oder hydraulische Stellelemente bevorzugt sind.

Die Anzahl der verwendeten Stege ist grundsätzlich frei wählbar und hängt von den Dimensionen der Transporteinrichtung und den zu transportierenden Objekten ab. Vorzugsweise ist zwischen jeder Transporteinrichtung ein Steg vorgesehen. Die Stege können gemeinsam, in Gruppen oder individuell angesteuert sein.

Die Stege können gemeinsam, in Gruppen oder individuell angesteuert sein. Die Stege können grundsätzlich eine beliebige Länge haben, solange diese zumindest das Doppelte des größten Durchmessers der Standfläche der Objekte aufweisen. Die Stege können zum Beispiel eine Länge von zwischen 0,3 m und 5 m, vorzugsweise von zwischen 0,5 m und 2 m, haben. Damit beim Übergang von den Transporteinrichtungen auf die Stege keine Stufen entstehen, bilden die Stege vorzugsweise eine schiefe Ebene, auf die die Objekte aufgeschoben werden. Alternativ oder zusätzlich können die Stege auch an den Stirnseiten mit abwärts geneigten Leitblechen versehen sein, so dass ein stufenloses Aufschieben der Objekte auch dann ermöglicht wird, wenn die Stege parallel zur Transportebene bewegbar sind.

Die Stege sind vorzugsweise stufenlos vertikal verfahrbar, so dass nicht nur die beiden Extrempunkte der Stegsteuerung, also "Stege voll ausgefahren" und "Stege vollständig abgesenkt", eingestellt werden können, sondern dass auch beliebige Zwischeneinstellungen möglich sind. Die Stege können die Objekte zum Beispiel so geringfügig über die Transportebene anheben, so dass die Stärke der Reibung zwischen den Objekten und den Transportbändern und die entsprechende auf die Objekte einwirkende Antriebskraft kontinuierlich verändert werden kann. Die Objekte können damit gezielt gebremst und beschleunigt werden, wobei die Gefahr eines Umkippens der Behälter weitgehend reduziert ist. Vorzugsweise können die Stege mit speziellen Beschichtungen versehen sein, so dass der Reibungskoeffizient der Stege definiert und an die jeweiligen Transportanforderungen angepasst werden kann.

Vorteilhafte Hubeinrichtungen umfassen zum Beispiel Exzenterstangen, die zum Beispiel unterhalb der Stege oder Transporteinrichtungen angeordnet sein können. Durch Drehung der Exzenterstangen, kann dann die Höhe der Stege oder Transporteinrichtungen variiert werden.

Eine weitere Möglichkeit für eine Hubeinrichtung besteht zum Beispiel in einer unter dem Steg oder der Transporteinrichtung angeordneten Schraubenschnecke mit Stellelement. Durch Drehung der Schraubenschnecke wird das Stellelement entsprechend der Steigung und des Durchmessers der Schraubenschnecke in der Höhe verfahren.

Die Oberfläche der Oberseite der Stege kann auch eine Profilierung aufweisen, so dass auf die zu transportierenden Objekte eine entsprechend dem Profil seitlich gerichtete Reibungskraft ausgeübt werden kann. Die Profilierung besteht dabei vorzugsweise aus schrägen Streifen einer Beschichtung erhöhter Reibung, wobei die Streifen unter einem Winkel schräg zur Transportrichtung angeordnet sind. Statt Streifen können die Stege auch schräge Schlitze an der Oberfläche aufweisen. Die Richtung der Profilierung gibt dann an in welche Richtung die Objekte abgelenkt werden. Das Profil kann sich entlang der Stege auch ändern, so dass unterschiedliches Ablenkverhalten über die Länge der Stege erreicht wird. Es ist auch möglich zwei höhenverstellbare Stege mit unterschiedlichen Profilen nebeneinander anzuordnen. In Abhängigkeit der jeweils benötigten Ablenkung, kann dann entscheiden werden, ob nur einer oder ob beide Stege ausgefahren werden sollen.

Die Transportvorrichtung kann auch horizontal verfahrbare Stellelemente aufweisen, mit denen die Stege und/oder Transporteinrichtungen quer zur Förderrichtung bewegt werden können. Dadurch kann die Transportvorrichtung, insbesondere der Abstand zwischen den einzelnen Stegen und/oder Transporteinrichtungen, variabel an die Größe der zu transportierenden Objekte angepasst werden.

Die Stege können dazu dienen, die zu transportierenden Behälter komplett von der Transportvorrichtung abzuheben. Solche Stege lassen sich insbesondere bei mehrbahnigen Staustrecken vorteilhaft nutzen. Beim Aufstauen der Objekte kommt es nämlich zu erheblichen Drücken am Ausgang der Staustrecken und durch die Reibung der unter den rückgestauten Objekten laufenden Transportbänder zu hohen Zugbelastungen, die sich sowohl auf das Band als auch auf die Antriebseinrichtung auswirken. Durch die Vermeidung dieser Reibungsverluste kann darüber hinaus eine beträchtliche Energieersparnis erzielt werden.

Die vorliegende Erfindung betrifft auch ein Verfahren zum Transportieren von Objekten und zur Steuerung des Behälterflusses. Das Verfahren umfasst die Bereitstellung einer ersten Transporteinrichtung, die eine erste Fördergeschwindigkeit aufweist, und das Bereitstellen mindestens einer zweiten Transporteinrichtung, die parallel zur ersten Transporteinrichtung angeordnet ist und eine zweite Fördergeschwindigkeit aufweist. Das Verfahren umfasst ferner den Schritt des Einstellens der Höhe von mindestens einer der Transporteinrichtungen, so dass zumindest ein Abschnitt einer Transportoberfläche der mindestens einen Transporteinrichtung über oder unter eine Transportoberfläche der anderen Transporteinrichtung anheb- oder absenkbar ist. Die Objekte werden jeweils nur auf der höher angeordneten Transporteinrichtung transportiert, so dass durch Variation der Höhe der Transporteinrichtungen die effektive Transportgeschwindigkeit festgelegt wird.

Die vorliegende Erfindung kann vorteilhaft in verschiedenen Bereichen der Behälterflusssteuerung eingesetzt werden. Zum Beispiel werden bei Förderanlagen oftmals Staustrecken benötigt, auf denen sich zu transportierende Objekte in mehreren parallelen Bahnen ansammeln können. Zwischen den Transportbändern und den darauf zurückgestauten Objekten treten hohe Reibungsverluste auf, die zu erhöhten Zugbelastungen der Transportbänder und Antriebsmotoren führen. Mit der erfindungsgemäßen Transportvorrichtung können die zurückgestauten Objekte von der sich kontinuierlich bewegenden ersten Fördereinrichtung abgehoben werden und stattdessen auf der zweiten Transporteinrichtung mit reduzierter Geschwindigkeit weiterbefördert werden.

Außerdem können mit der vorliegenden Erfindung auch variable Beschleunigungsstrecken implementiert werden, die bei Bedarf eingesetzt werden können und entsprechend dem tatsächlichen Transportbedarf angesteuert werden können. In einer einfachen Ausführungsform können hierbei die Objekte von der ersten Transporteinrichtung herangeführt werden und dann auf die schneller laufende zweite Transporteinrichtung überführt werden. Dabei ist zweckmäßigerweise die Transportebene der zweiten Transporteinrichtung gegenüber der Transportebene der ersten Transporteinrichtung leicht geneigt, so dass die Objekte stufenlos von der einen Transporteinrichtung auf die andere Transporteinrichtung gefördert werden können. Am Ende der Beschleunigungsstrecke werden die Objekte wiederum auf die erste Transporteinrichtung abgesetzt. Da hierbei auch kein Querverschieben der Objekte nötig ist, ist die Gefahr eines Umkippens der Objekte reduziert.

Ein weiteres Anwendungsgebiet der vorliegenden Erfindung ist die staudrucklose Vereinzelung von im Pulk transportierten Objekten. Bisher wird hierzu ein mehrspuriger Behälterstrom auf einen Beschleunigungsbereich geführt, auf dem jeweils die vorderste Behälterreihe zeitversetzt abgegeben wird. Die Behälterreihe wird dann an einem langen Geländer entlang geführt, an dem sich die Behälter im Idealfall hintereinander anordnen und einen einspurigen Behälterstrom bilden. Die Behälter werden hierbei nicht geführt, und es kommt immer wieder vor, dass zwei Behälter nebeneinander auf das Geländer zulaufen und sich nicht von alleine hintereinander anordnen können. Mit der vorliegenden Erfindung lässt sich dieses Verfahren besser kontrollieren, indem durch gezieltes Absenken der Transporteinrichtungen einzelne Behälter gesteuert und nacheinander auf die abführende Transporteinrichtung abgegeben werden. Mit der Steuerung kann sichergestellt werden, dass die Objekte jeweils einzeln abgegeben werden, und dass ein zeitgleiches Freigeben zweier Behälter vermieden wird. Die Behälter können daher an einem vergleichsweise kurzen Geländer zu einem einspurigen Strom umgeformt werden.

Ein weiteres Anwendungsgebiet liegt in der Steuerung des Behälterflusses eines einspurigen Behälterstroms. Durch selektives Beschleunigen oder Abbremsen einzelner Objekte, kann der Abstand zwischen den einzelnen Objekten gezielt eingestellt werden. Dadurch ist es möglich Gruppen von Objekten zu bilden oder aber auch den Abstand zwischen einzelnen Objekten gezielt einzustellen. Insbesondere letzteres kann sehr vorteilhaft in Kombination mit typischerweise bei Abfüllsystemen eingesetzten Inspektions-, Etikettier-, oder Abfülleinrichtungen verwendet werden. Üblicherweise werden hierzu die Behälter bei der Übergabe in derartige Einrichtungen über Einteilschnecken auf einen vorbestimmten Abstand gebracht. Derartige passive Einteilvorrichtungen können jedoch weder auf Störungen im Behälterfluss reagieren noch sind diese flexibel für verschiedene Systeme einsetzbar. Durch die vorliegende Erfindung können Objekte dagegen gezielt auf den jeweils erforderlichen Abstand gebracht werden oder an neue Transportaufgaben angepasst werden.

Mit der vorliegenden Erfindung ist es nicht nur möglich, die einzelnen Objekte mit der Transportgeschwindigkeit der parallel angeordneten Transporteinrichtungen zu fördern. Wenn die unterschiedlichen Transporteinrichtungen fast auf derselben Höhe befinden, tragen alle Transporteinrichtungen zum Transport der Objekte bei. Die Objekte gelangen dabei abwechselnd mit den unterschiedlichen Transporteinrichtungen in Eingriff. Die sich tatsächlich ergebende Fördergeschwindigkeit hängt dabei dann nicht nur von den absoluten Geschwindigkeiten der einzelnen Transporteinrichtungen ab, sondern hängt auch davon ab, wie stark die Objekte mit den unterschiedlichen Transporteinrichtungen in Eingriff gebracht werden. Durch exakte Einstellung der Höhe der unterschiedlichen Transporteinrichtungen, können also auch beliebige effektive Zwischengeschwindigkeiten eingestellt werden. Durch Einstellung eines sehr langsamen Übergangs, kann die sich ergebende Zwischengeschwindigkeit langsam erhöht werden, so dass abrupte Beschleunigungen beim Übergang der Objekte von einer Transportvorrichtung auf die andere vermieden werden können.

Die exakte Einstellung von Zwischengeschwindigkeiten kann auch bei der Vereinzelung eines mehrspurigen Behälterstroms vorteilhaft ausgenutzt werden. Der Flaschendurchsatz am Ausgang eines Vereinzelungsbereichs bestimmt sich alleine anhand der Geschwindigkeit der abführenden Transporteinrichtung. Wenn der mehrspurigen Zuführbereich mit der erfindungsgemäßen Transportvorrichtung ausgestattet ist, kann durch eine Variation des Höhenunterschieds der parallelen Transporteinrichtungen die effektive Fördergeschwindigkeit so eingestellt werden, dass die zugeführte Flaschenmenge gerade dem Flaschendurchsatz am Ausgang des Vereinzelungsbereichs entspricht. Zur Regelung der Zwischengeschwindigkeit kann die tatsächliche Fördergeschwindigkeit einzelner Flaschen oder auch die sich ergebende Gruppengeschwindigkeit von Flaschengruppen zum Beispiel mithilfe von Kameras bestimmt werden. In Abhängigkeit der Messdaten, kann dann die vertikale Position der Transporteinrichtungen eingestellt werden.

Verschiedene der oben beschriebenen Ausführungsformen und Steuerungsverfahren können auch innerhalb einer Transportvorrichtung kombiniert werden. Dadurch kann die erfindungsgemäße Transportvorrichtung noch vielseitiger eingesetzt werden. Zum Beispiel kann durch eine Kombination unterschiedlicher Hubeinrichtungen auf eine und derselben Transportvorrichtung eine normale Förderstrecke, eine Aufholstrecke und eine Staustrecke realisiert werden. Je nach aktueller Förderaufgabe kann dann die Fördercharakteristik der Transportvorrichtung eingestellt werden. Es ist dann sogar möglich, auf einer Transportvorrichtung abschnittsweise eine Aufholstrecke und zeitgleich in einem anderen Abschnitt der Transportvorrichtung eine Staustrecke zu implementieren.

Ausführungsbeispiele der Erfindung werden nachfolgend anhand der Zeichnungen erläutert. Es zeigen:
Figur 1 Aufsicht einer Transportvorrichtung mit abwechselnd angeordneten festen und höhenverstellbaren Transporteinrichtungen;
Figur 2 Querschnittsansicht der Transportvorrichtung aus Figur 1 mit abgesenkter Transporteinrichtung;
Figur 3 Querschnittsansicht der Transportvorrichtung aus Figur 1 mit angehobener Transporteinrichtung;
Figur 4 Querschnittsansicht der Transportvorrichtung aus Figur 1, wobei die Transporteinrichtungen mit Rollen versehen sind;
Figur 5 Aufsicht der Transportvorrichtung aus Figur 4;
Figur 6 Seitenansicht einer Transportvorrichtung mit über die Länge verteilten Stellgliedern;
Figur 7 Seitenansicht einer Transportvorrichtung mit zusätzlichem Band mit Zunge;
Figur 8 Querschnittsansicht einer Transportvorrichtung mit höhenverstellbaren Transporteinrichtungen und höhenverstellbaren Stegen;
Figur 9 Seitenansicht der Transportvorrichtung aus Figur 8;
Figur 10 Querschnittsansicht einer Transportvorrichtung mit höhenverstellbaren Transporteinrichtungen und Stegen und einstellbarem horizontalen Abstand;
Figur 11 Verschieden Stegprofile; und
Figur 12 verschieden Oberflächenprofile der Stege.

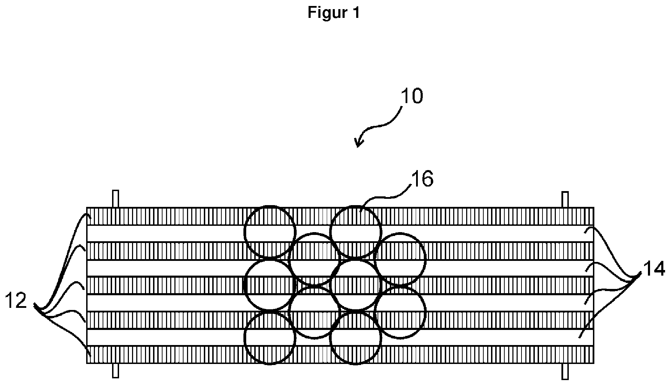

Figur 1 zeigt eine Transportvorrichtung 10 mit mehreren parallel angeordneten Transporteinrichtungen 12, 14, auf der eine Vielzahl von Objekten 16 transportiert wird. In diesem Beispiel sind die Transporteinrichtungen 12, 14 umlaufende Transportbänder, und die Objekte 16 sind Getränkeflaschen. Die Transportbänder 12, 14 sind abwechselnd als fest angeordnete Transportbänder 12 und als höhenverstellbare Transportbänder 14 ausgeführt. Anstelle von Transportbändern können aber genauso gut Gliederkettenförderer oder andere geeignete Transporteinrichtungen zum Einsatz kommen.

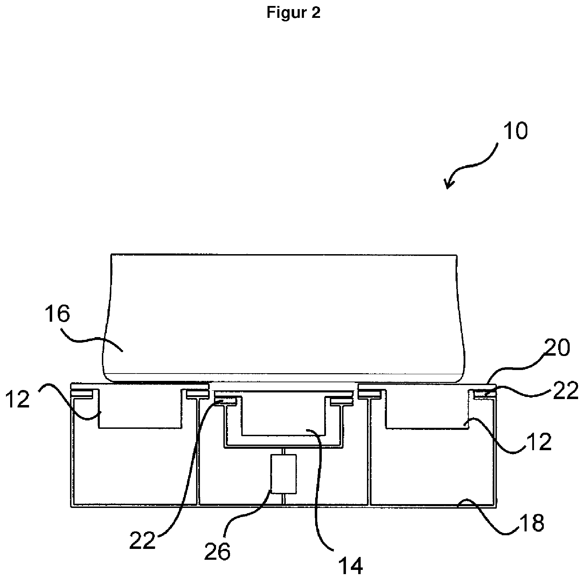

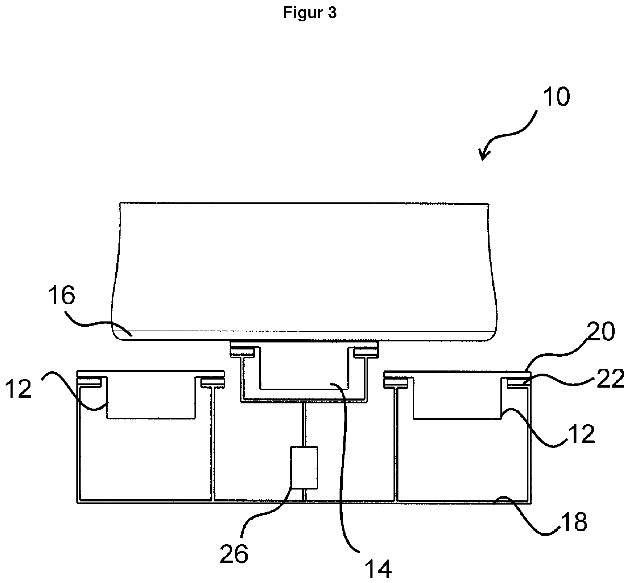

In den Figuren 2 und 3 ist die Transportvorrichtung 10 in einer Querschnittsansicht orthogonal zur Förderrichtung gezeigt. Figur 2 zeigt dabei einen Ausschnitt der Transportvorrichtung 10 mit zwei fest angeordneten Transporteinrichtungen 12 und einer höhenverstellbaren Transporteinrichtung 14, die in einer Rahmenkonstruktion 18 angeordnet sind. Jedes Transportband 12, 14 weist seitliche Schultern 20 auf, mit denen die Transportbänder 12, 14 auf Auflageflächen 22 der Rahmenkonstruktion 18 aufliegen.

Das mittlere Transportband 14 in den Figuren 2 und 3 ist höhenverstellbar ausgeführt. Hierzu weist die Rahmenkonstruktion 18 ein Stellglied 26 auf, mit dem die Auflageflächen 22, auf denen das höhenverstellbare Transportband 14 aufliegt, in der Höhe verfahren werden können. In der in Figur 2 gezeigten Konfiguration ist das Stellglied 26 eingefahren, so dass die Transportfläche des Transportbands 14 unter die Transportebene, die durch die nicht-höhenverstellbaren Transportbänder 12 definiert ist, abgesenkt ist. Der Flaschenboden der zu transportierenden Flasche 16 steht daher ausschließlich auf den beiden fest angeordneten Transportbändern 12 und wird daher mit der Transportgeschwindigkeit dieser Transportbänder bewegt.

Damit die Flasche auf den Transportbändern 12, 14 einen sicheren Stand hat, beträgt die Breite der Transportbänder 12, 14 etwa 40 % des Durchmessers der zu transportierenden Flasche 16.

In Figur 3 ist das Stellglied 26 dagegen ausgefahren, so dass das höhenverstellbare Transportband 14 über die durch die fest angeordneten Transportbänder 12 vorgegebene Transportebene angehoben ist. In dieser Konfiguration steht die Flasche 16 nur auf dem höhenverstellbaren Transportband 14 und wird daher mit der Transportgeschwindigkeit dieses Transportbands bewegt.

Vorzugsweise umfasst die Transportvorrichtung 10 mehrere Stellglieder 26, so dass die Höhe der Transportbänder 14 über die Länge der Transportvorrichtung 10 variiert werden kann und die zu transportierenden Flaschen 16 abschnittsweise auf den festen oder den höhenverstellbaren Transportbändern 12, 14 bewegt werden.

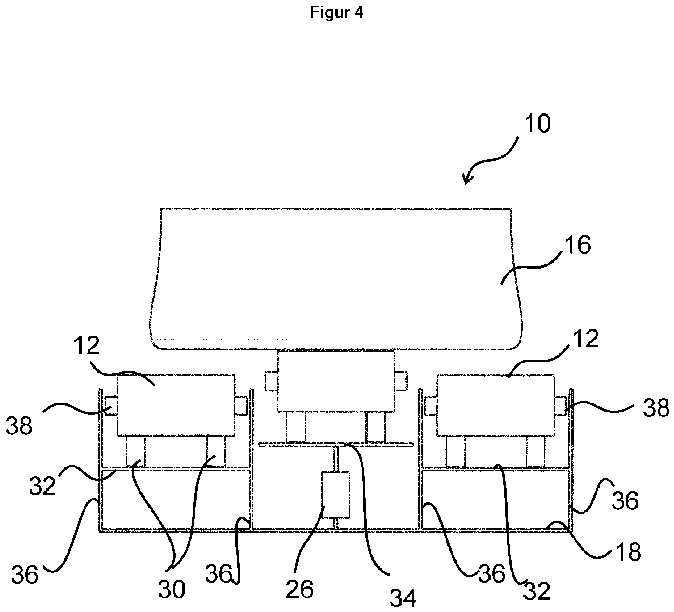

Bei den in Figur 2 und 3 gezeigten Ausführungsformen werden die Transportbänder 12, 14 mit ihren Schultern 20 über die durchgängigen Auflageflächen 22 der Rahmenkonstruktion 18 gezogen. Diese Technik wird heutzutage in den meisten Transportvorrichtungen eingesetzt, obwohl es hierbei zu einer großen Materialbelastung für die Transportbänder 12, 14 und die Antriebseinheiten kommt und obwohl dadurch auch erhebliche Energieverluste auftreten. In Figur 4 ist daher eine weitere Ausführungsform der vorliegenden Erfindung dargestellt, bei der die einzelnen parallel angeordneten Transportbänder 12, 14 jeweils mit Rollen 30 versehen sind, über die die Transportbänder 12, 14 auf Bahnen 32, 34 in der Rahmenkonstruktion 18 der Transporteinrichtung 10 abrollen. Die Bahnen 32, 34, auf denen die Transportbänder 12, 14 abrollen, sind dabei wiederum abwechselnd höhenverstellbar und fest ausgeführt. Die in Figur 4 gezeigte höhenverstellbare Bahn 34 wird über das Stellglied 26 vertikal verfahren.

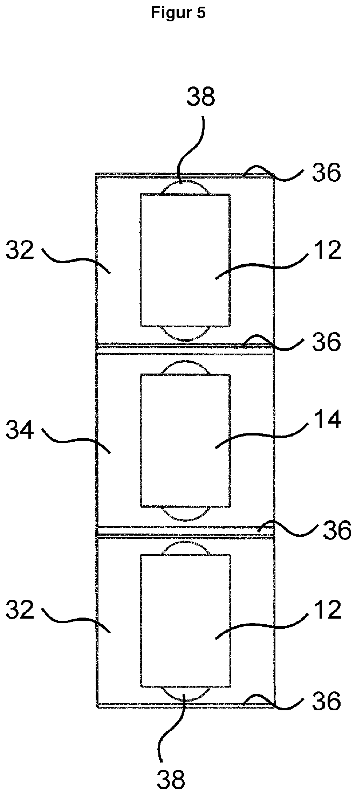

Um ein seitliches Verrutschen der einzelnen Transportbänder 12, 14 zu verhindern, sind zwischen den Bahnen 32, 34 Trennwände 36 vorgesehen. Da die Trennwände 36 ihrerseits eine Quelle zusätzlicher Reibungsverluste darstellen, sind die Transportbänder 12, 14 auch seitlich mit Rollen 38 versehen, mit denen die Transportbänder 12, 14 an den Trennwänden 36 abrollen können. Diese seitlich vorgesehenen Rollen 38 sind besonders gut in Figur 5 zu erkennen, die eine Draufsicht der Transportvorrichtung 10 aus Figur 4 darstellt. Hierbei ist nur jeweils ein Element bzw. ein kurzer Abschnitt jedes Transportbandes 12, 14 abgebildet.

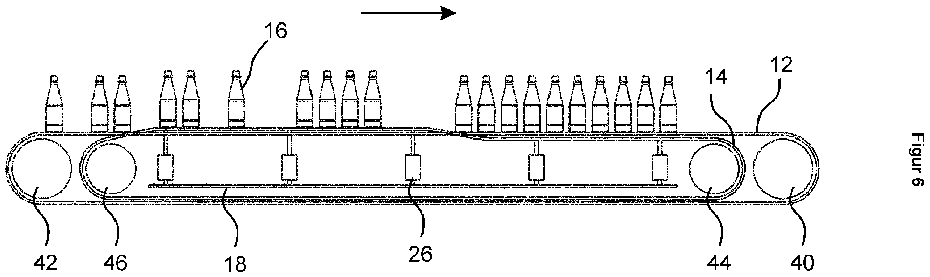

In Figur 6 ist eine Seitenansicht eines Transporteurs mit in abwechselnder Reihenfolge nicht-höhenverstellbaren und höhenverstellbaren parallelen Transportbahnen 12, 14 gezeigt. In der Seitenansicht sind jeweils nur ein höhenverstellbares Transportband 14 und ein nichthöhenverstellbares Transportband 12 dargestellt. Selbstverständlich können aber beliebig viele Transportbänder 12, 14 in beliebiger, vorzugsweise abwechselnder Reihenfolge angeordnet werden. Die tatsächliche Anordnung und Anzahl der verwendeten Transportbänder 12, 14 hängt dabei von dem jeweiligen Einsatzzweck ab. Der Übersichtlichkeit halber ist in Figur 6 die Rahmenkonstruktion, über die die Transportbänder 12, 14 laufen und an der die Stellglieder 26 angreifen, nur angedeutet. Die Rahmenkonstruktion 18 kann aber eine der Rahmenkonstruktionen aus den Figuren 2, 3 oder 4 sein.

Das nicht-höhenverstellbare Transportband 12 entspricht im Wesentlichen einem herkömmlichen umlaufenden Transportband, welches über zwei Umlenkrollen 40, 42 gespannt ist. Die in Transportrichtung (angedeutet durch den Pfeil in Figur 6) vordere Umlenkrolle 40 ist dabei die Antriebsrolle, über die ein Motor das Transportband 12 antreibt. Die nicht-höhenverstellbaren Transportbänder 12 definieren eine erste Transportebene, auf der die Flaschen 16 mit der Umlaufgeschwindigkeit dieser Transportbänder bewegt werden.

Zwischen den Umlenkrollen 40, 42 der nicht höhenverstellbaren Transportbänder 12 befinden sich zwei weitere Umlenkrollen 44, 46 mit geringerem Durchmesser, über die die höhenverstellbaren Transportbänder 14 geführt sind. Die höhenverstellbaren Transportbänder 14 weisen in regelmäßigen Abständen ausfahrbare Stellelemente 26 auf, mit denen die entsprechenden Transportbänder 14 über die Transportebene der nicht-höhenverstellbaren Transportbänder 12 angehoben werden können.

Die in Figur 6 dargestellte Vorrichtung lässt sich besonders vorteilhaft als Aufholstrecke einsetzen. Aufholstrecken dienen dazu, um Lücken beim Behältertransport zu schließen. Hierzu werden bisher üblicherweise Behälter für kurze Zeit auf parallel laufende schnellere Transporteure geschoben. Durch die erhöhte Transportgeschwindigkeit können Lücken zu einem vorauseilenden Flaschenstrom geschlossen werden. Das Querverschieben und anschließende Beschleunigen der Behälter ist dabei jedoch relativ störanfällig und platzintensiv.

Die vorliegende Erfindung bietet dagegen ein neues Verfahren zur Implementierung von Aufholstrecken, die ohne zusätzlichen Platzbedarf auskommen, die flexibel einsetzbar sind und bei denen das Risiko eines Umkippens der Behälter gegenüber herkömmlichen Aufholstrecken reduziert ist. Wenn es nötig ist, Behälter kurzzeitig mit erhöhter Geschwindigkeit zu befördern, um eventuell entstandene Lücken zu vorauseilenden Behältern zu schließen, so können hierzu bei der in Figur 6 gezeigten Vorrichtung die Stellelemente 26 abschnittsweise ausgefahren werden, um die Transportflächen der höhenverstellbaren Transportbänder 14 in den betreffenden Abschnitten über die Transportebene der nicht-höhenverstellbaren Transportbahnen 12 anzuheben. Durch das Anheben kommen diese Transportbänder dann in Eingriff mit den Flaschen und transportieren diese in dem jeweiligen Abschnitt mit höherer Geschwindigkeit.

Das Anheben erfolgt dabei vorzugsweise so, dass zumindest abschnittsweise zwischen den höhenverstellbaren Transportbändern 14 und den nicht-höhenverstellbaren Transportbändern 12 ein spitzer Winkel eingestellt wird, so dass die Flaschen 16 im Wesentlichen ähnlich wie bei einer schiefen Ebene auf die höhenverstellbaren Transportbänder 14 aufgeschoben werden. Es ergibt sich dabei ein Übergangsbereich, bei dem die Flaschen 16 allmählich von der Transportebene der nicht-höhenverstellbaren Transportbänder 12 abgehoben werden und langsam in Eingriff mit den höhenverstellbaren Transportbändern 14 kommen.

Die Länge der Aufholstrecke kann in der in Figur 6 dargestellten Ausführungsform an den jeweiligen Betriebszustand angepasst werden. Hierzu können die Stellglieder 26 einzeln angesteuert werden. In Figur 6 sind zum Beispiel nur die ersten drei Stellglieder 26 ausgefahren. Die Flaschen 16, die sich in diesem Bereich befinden, stehen auf der Transportfläche der sich schneller bewegenden höhenverstellbaren Transportbänder 14 und werden daher in diesem Bereich mit höherer Geschwindigkeit transportiert. In dem zweiten Abschnitt der Transportvorrichtung, also im Bereich der nicht ausgefahrenen Stellglieder 26, werden diese Flaschen 16 dagegen wieder auf die Transportebenen der nicht höhenverstellbaren Transportbänder 12 abgesetzt und werden dort mit deren langsamerer Transportgeschwindigkeit weitergefördert. Die Aufholstrecke kann in der Ausführungsform in Figur 6 bei Bedarf zugeschaltet werden. Wenn dagegen keine Transportlücken auftreten, kann durch Absenken aller Stellglieder 26 eine konstante Transportgeschwindigkeit über den gesamten Förderweg verwendet werden.

In der Ausführungsform in Figur 6 weisen die höhenverstellbaren Transportbänder 14 einen kürzeren Transportweg auf als die nicht-höhenverstellbaren Transportbänder 12. Es ist allerdings auch möglich, dass alle Transportbänder 12, 14 gleich lang und in Transportrichtung zueinander versetzt angeordnet sind. Um besonders lange Förderstrecken zu erstellen, können auch mehrere Transportvorrichtungen 10 hintereinander angeordnet werden. An den Übergängen zwischen den einzelnen Transportvorrichtungen 10 können die entsprechenden Enden der Transporteinrichtungen 12, 14 dann fächerartig ineinander greifen, um somit eine kontinuierliche Transportebene zu definieren.

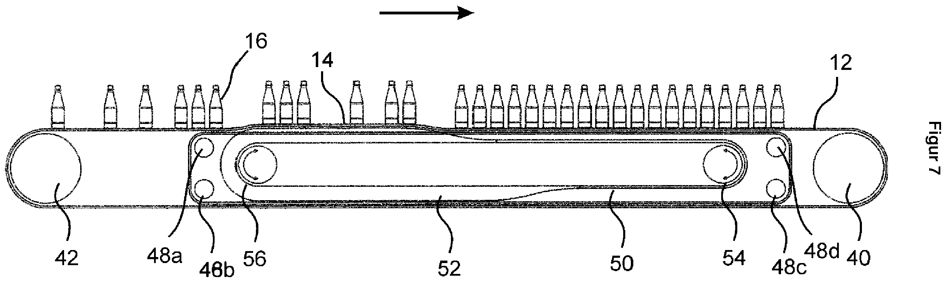

Eine weitere Ausführungsform der vorliegenden Erfindung ist in Figur 7 in einer Seitenansicht abgebildet. Der Übersichtlichkeit halber ist wiederum nur jeweils ein Transportband gezeigt. Wie in Figur 6 entspricht das nicht-höhenverstellbare Transportband 12 im Wesentlichen einem herkömmlichen umlaufenden Transportband, das über zwei äußere Umlenkrollen 40, 42 gespannt ist, wobei die nicht-höhenverstellbaren Transportbänder 12 eine erste Transportebene definieren, auf der die Flaschen 16 mit der Umlaufgeschwindigkeit dieser Transportbänder 12 gefördert werden können.

Die höhenverstellbaren Transportbänder 14 werden in dieser Ausführungsform über vier äußere Umlenkrollen 48a, 48b, 48c, 48d geführt. Der Scheitelpunkt der oberen Umlenkrollen 48a, 48d befindet sich dabei unterhalb der Transportebene der nicht-höhenverstellbaren Transportbänder 12, so dass die höhenverstellbaren Transportbänder 14 zunächst unterhalb dieser Transportebene angeordnet sind.

Um die höhenverstellbaren Transportbänder 14 anzuheben, sind in dieser Ausführungsform nicht unabhängig voneinander einstellbare einzelne Stellglieder vorgesehen. Stattdessen ist ein zusätzliches umlaufendes Band 50 vorgesehen, welches über Umlenkrollen 54, 56 gespannt ist und eine Zunge 52 bzw. einen Bereich erhöhter Dicke aufweist. Dieses zusätzliche Band 50 wird, wie in Figur 7 abgebildet, unmittelbar unter dem höhenverstellbaren Transportband 14 geführt. Um das höhenverstellbare Transportband 14 anzuheben, wird die Zunge 52 des zusätzlichen Bands 50 unter die Transportoberfläche des Ober-trums des höhenverstellbaren Transportbands 14 bewegt. Die Zunge 52 drückt die Transportoberfläche des höhenverstellbaren Transportbands 14 nach oben über die Transportebene der nicht-höhenverstellbaren Transportbänder 12. Durch Verdrehen des zusätzlichen umlaufenden Bands 50 kann auf einfache Art und Weise die Länge der Aufholstrecke eingestellt werden.

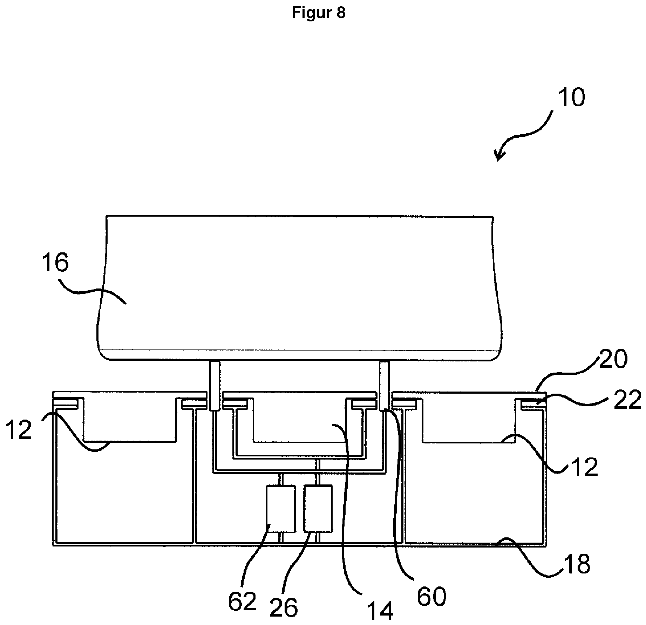

Die in Figur 8 dargestellte Ausführungsform ist eine Modifikation bzw. Ergänzung der Ausführungsform aus den Figuren 2 und 3. Hierbei sind zwischen den Transportbändern 12, 14 höhenverstellbare Stege 60 geringer Breite angeordnet. Die Stege 60 sind über ein eigenes Stellelement 62 ansteuerbar und dienen dazu, die zu transportierenden Flaschen 16 komplett vom Transporteur abzuheben. Die Flasche 16 in Figur 8 steht ausschließlich auf zwei benachbarten Stegen 60 und wird daher momentan nicht transportiert.

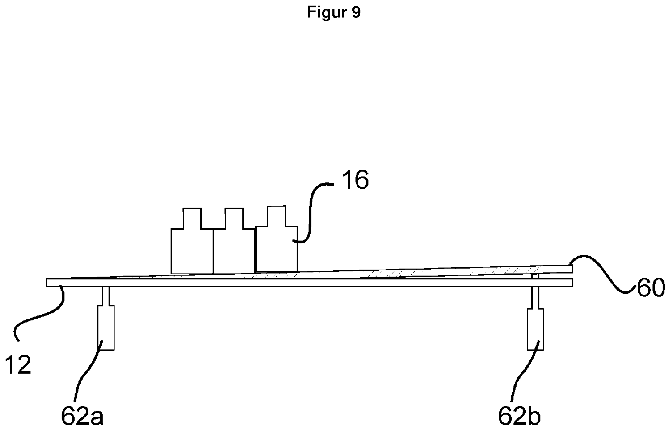

In Figur 9 ist eine Seitenansicht einer Transportvorrichtung 10 mit Stegen 60 abgebildet. Die Stege werden über zwei Stellelemente 62a, 62b positioniert. Um ein möglichst sanftes Aufschieben der Flaschen 16 auf die Stege 60 zu ermöglichen, werden die Stege 60 so positioniert, dass sie eine schiefe Ebene bilden, auf die die einzelnen Flaschen 16 dann nach und nach aufgeschoben werden. Zum Freigeben der Flaschen 16 werden die Stege 60 dann zumindest am stromabwärts gelegenen Ende abgesenkt, so dass die Flaschen 16 dann auf der Transportvorrichtung 10 abgesetzt und weiter transportiert werden können.

Da die Flaschen 16, solange sie auf den Stegen 60 stehen, nicht in Kontakt mit den Transportbändern 12, 14 sind, entsteht auch keine Reibung zwischen den Flaschen 16 und den Transportbändern 12, 14, so dass mit dieser Ausführungsform insbesondere bei der Implementierung von Staustrecken eine erhebliche Energieersparnis erzielt werden kann.

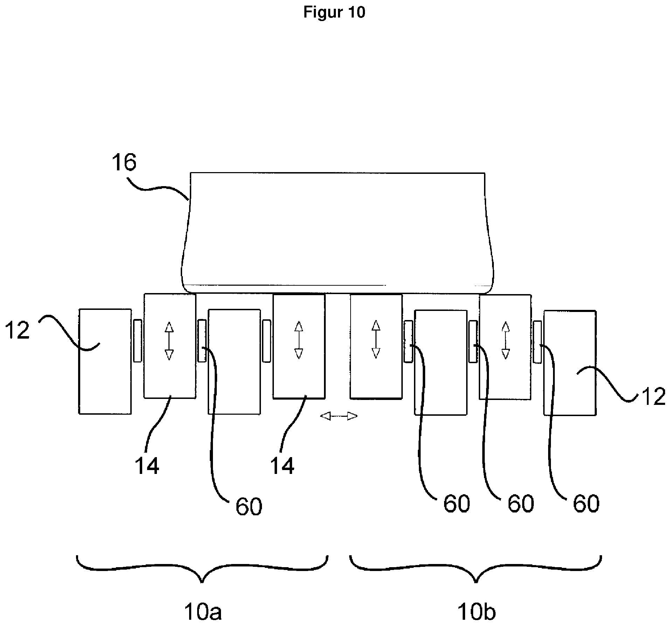

Schließlich ist in Figur 10 eine Ausführungsform dargestellt, bei der die Transportvorrichtung 10 zwei Blöcke 10a, 10b umfasst. Jeder Block 10a, 10b besteht aus zwei höhenverstellbaren und zwei nicht-höhenverstellbaren Transportbändern 12, 14, sowie aus drei höhenverstellbaren Stegen 60. Die Blöcke 10a, 10b sind dabei zueinander in horizontaler Richtung quer zur Förderrichtung verfahrbar, so dass der Abstand zwischen diesen Blöcken 10a, 10b eingestellt werden kann. Dadurch kann die Transportvorrichtung 10 optimal an die Größe der zu transportierenden Behälter 16 angepasst werden. Für die horizontale Positionierung können wiederum beliebige, dem Fachmann bekannte Stellelemente verwendet werden.

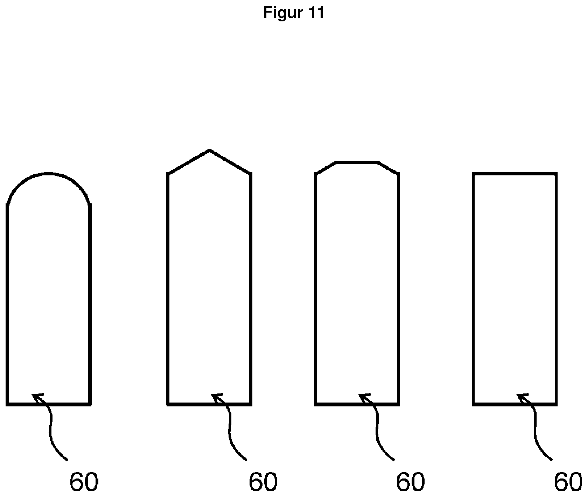

Bei der Umformung von Behälterströmen werden die Behälter 16 oft auch mit einer Komponente quer zur Transportrichtung auf der Transportvorrichtung 10 verschoben. Dies bedeutet allerdings bei einer Ausführungsform mit Stegen, dass die Behälter 16 quer über die möglicherweise leicht erhöhten Stege geschoben werden müssen. Stege mit rechteckigem Profil würden dabei wie Stufenkanten wirken, und könnten eine Umkippen der Behälter 16 auslösen. Um ein solches Kippen zu vermeiden, weisen die Stege zweckmäßiger Weise ein abgerundetes oder facettiertes Profil auf. Mögliche Profilformen für die Oberseiten der Stege sind in Figur 11 abgebildet.

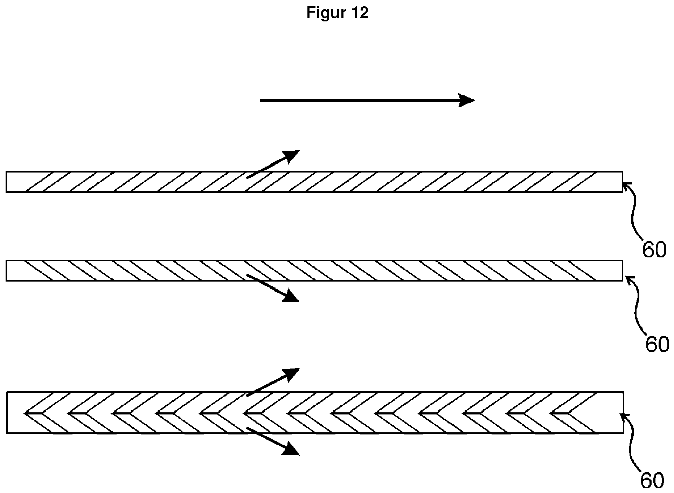

In Figur 12 sind Oberseiten von Stegen abgebildet, die jeweils ein unterschiedliches Reibungsprofil aufweisen. Das Reibungsprofil kann zum Beispiel aus Streifen einer Reibungsbeschichtung bestehen. Das Profil kann auch durch schräg angeordnete Schlitze gebildet sein. Wenn die Stege nur so weit ausgefahren werden, dass die Objekte zwar noch gefördert werden, aber zwischen der Oberfläche der Stege und den Objekten eine Reibung erzeugt wird, so kann durch das Reibungsprofil eine Ablenkung der Objekte erreicht werden. Die Richtung des Reibungsprofils gibt an, in welcher Richtung die zu transportierenden Objekte abgelenkt werden. Die Ablenkungsrichtung ist durch die jeweiligen Pfeile in Figur 12 dargestellt.

### Bezugszeichenliste:

| | | | |
|---|---|---|---|
| 10 | Transportvorrichtung | 38 | seitliche Rollen |
| 12 | fest angeordnete Transporteinrichtung | 40 | vordere Umlenkrolle |
| 14 | höhenverstellbare Transporteinrichtung | 42 | hintere Umlenkrolle |
| 16 | Objekt | 44 | weitere Umlenkrolle |
| 18 | Rahmenkonstruktion | 46 | weitere Umlenkrolle |
| 20 | seitliche Schultern | 48 | Umlenkrollen |
| 22 | Auflageflächen | 50 | zusätzliches umlaufendes Band |
| 26 | Stellelemente | 52 | Zunge |
| 30 | Rollen | 54 | Umlenkrolle |
| 32 | fest angeordnete Bahnen | 56 | Umlenkrolle |
| 34 | höhenverstellbare Bahnen | 60 | höhenverstellbarer Steg |
| 36 | Trennwände | 62 | Stellelement |

## Patentansprüche

1. Vorrichtung zum Transportieren von stehenden Objekten, wie Behältern, Flaschen, Gebinden, Packstücken, umfassend
eine erste Transporteinrichtung (12), die eine erste Fördergeschwindigkeit aufweist, und
mindestens eine zweite Transporteinrichtung (14), die parallel zur ersten Transporteinrichtung (12) angeordnet ist und eine zweite Fördergeschwindigkeit aufweist,
wobei die erste und die mindestens eine zweite Transporteinrichtung miteinander eine im Wesentlichen geschlossene Transportoberfläche bilden und dieselbe Förderrichtung aufweisen,
die Vorrichtung ferner umfassend
mindestens eine Hubeinrichtung (26), mit der mindestens eine der Transporteinrichtungen (12, 14) höhenverstellbar ist, so dass zumindest ein Abschnitt einer Transportoberfläche der mindestens einen Transporteinrichtung (12, 14) über und/oder unter eine Transportoberfläche der anderen Transporteinrichtung (14, 12) anheb- und/oder absenkbar ist,
wobei die Transportvorrichtung (10) höhenverstellbare Stege (60) aufweist, die über Hubeinrichtungen (62) vertikal positioniert werden können, so dass zumindest ein Abschnitt der Stege (60) über und unter die Transportebene der Transportvorrichtung (10) anheb- und absenkbar ist.

2. Vorrichtung gemäß Anspruch 1, wobei die Geschwindigkeit der mindestens einen ersten Transporteinrichtung (12) und die Geschwindigkeit der mindestens einen zweiten Transporteinrichtung (14) einstellbar ist.

3. Vorrichtung gemäß Anspruch 1 oder 2, wobei die mindestens eine erste Transporteinrichtung (12) und mindestens eine zweite Transporteinrichtung (14) zueinander in Förderrichtung zumindest abschnittsweise verkippbar sind, so dass sich zwischen den Transportoberflächen der ersten und der zweiten Transporteinrichtung (12, 14) zumindest abschnittsweise ein Winkel ergibt.

4. Vorrichtung gemäß einem der vorhergehenden Ansprüche, wobei die Breite der Transporteinrichtungen jeweils etwa gleich groß und kleiner als 50 %, vorzugsweise kleiner als 30 % und noch bevorzugter kleiner als 20 % der Breite der Standfläche der zu transportierenden Objekte (16) ist.

5. Vorrichtung gemäß Anspruch 1, wobei die Transporteinrichtungen (12, 14) endlose Gliederkettenförderer sind und die einzelnen Glieder der verwendeten Gliederketten Rollen (30) aufweisen, auf denen die Gliederketten über Bahnen (32, 34) in der Rahmenkonstruktion (18) der Transportvorrichtung abrollen können,

6. Vorrichtung gemäß einem der vorhergehenden Ansprüche, wobei die Transporteinrichtungen (12, 14) jeweils einzeln über Nabenmotoren angetrieben werden, die vorzugsweise mit einer Spannung von unter 50 V betrieben werden.

7. Vorrichtung gemäß einem der vorhergehenden Ansprüche, wobei die Transporteinrichtungen (12, 14) und oder Stege (60) über Hubeinrichtungen (26) am vorderen und/oder hinteren Ende höhenverstellbar sind, und wobei die Hubeinrichtungen (26) mechanische, elektromotorische, pneumatische oder hydraulische Stellelemente aufweisen.

8. Vorrichtung gemäß einem der vorhergehenden Ansprüche, wobei zwischen den Transporteinrichtungen (12, 14) Trennwände (36) vorgesehen sind, und wobei die Kettenglieder der Gliederkette seitliche Rollen (38) aufweisen, mit denen die Gliederketten an den seitlichen Trennwänden (36) abrollen können.

9. Verfahren zum Transportieren von Objekten, wie Behältern, Gebinden, Packstücken, umfassend
eine erste Transporteinrichtung (12), die eine erste Fördergeschwindigkeit aufweist,
mindestens eine zweite Transporteinrichtung (14), die parallel zur ersten Transporteinrichtung (12) angeordnet ist und eine zweite Fördergeschwindigkeit aufweist,
wobei die Höhe von mindestens einer Transporteinrichtung (12, 14) einstellbar ist, so dass zumindest ein Abschnitt einer Transportoberfläche der mindestens einen Transporteinrichtung (12, 14) über und/oder unter eine Transportoberfläche der anderen Transporteinrichtung (14, 12) anheb- und/oder absenkbar ist, und zusätzlich umfassend:
die Bereitstellung von höhenverstellbaren Stegen (60) und Hubeinrichtungen (62), mit denen die höhenverstellbaren Stege (60) vertikal positioniert werden können, so dass zumindest ein Abschnitt der Stege (60) über und unter die Transportebene der Transportvorrichtung (10) anheb- und absenkbar ist.

10. Verfahren gemäß Anspruch 9 zum staudrucklosen Vereinzeln von auf einer Transportvorrichtung (10) transportierten Objekten (16), wobei zunächst auf einer Staustrecke der Transportvorrichtung (10) ein mehrreihiges Pulk von Objekten (16) mittels der höhenverstellbaren Stege von der Transportebene der Transportvorrichtung (10) abgehoben wird,
und wobei über gezieltes Absenken der stromabwärts liegenden Enden der Stege (60) der jeweils vorderste Behälter (16) des Pulks einzeln in einen Vereinzelungsbereich freigegeben wird, und wobei der Behälterstrom anschließend mittels eines kurzen, in einem stumpfen Winkel zur Transportrichtung angeordneten Geländers zu einem einspurigen Behälterstrom umgeformt wird.

11. Verfahren gemäß Anspruch 9 zur Implementierung variabler Staustrecken, wobei zur Reduzierung der Reibung die auf der Transportvorrichtung zurückgestauten Objekte, mittels der Stege (60) komplett von der Transportvorrichtung abgehoben werden.
